(19) Europäisches Patentamt
European Patent Office
Office européen des brevets

(11) **EP 2 538 372 A1**

(12) **EUROPEAN PATENT APPLICATION**

(43) Date of publication:
**26.12.2012 Bulletin 2012/52**

(51) Int Cl.:
**G06K 9/00** *(2006.01)*  **G06K 9/34** *(2006.01)*
**G06K 9/44** *(2006.01)*  **G06T 7/00** *(2006.01)*

(21) Application number: **11171237.8**

(22) Date of filing: **23.06.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Alcatel Lucent
75007 Paris (FR)**

(72) Inventors:
• **Nouri, Marwen
91620 NOZAY (FR)**

• **Marilly, Emmanuel
91620 NOZAY (FR)**
• **Martinot, Olivier
93620 NOZAY (FR)**
• **Vincent, Nicole
75013 PARIS (FR)**

(74) Representative: **Demulsant, Xavier
Dejade & Biset
35, rue de Châteaudun
75009 Paris (FR)**

(54) **Dynamic gesture recognition process and authoring system**

(57) A method for performing gesture recognition within a media, comprising the steps of:
- receiving at lesat a first raw frame from at least one camera;

- drawing at least one scribble pointing out one element within said first raw frame;
- tracking said scribble across the media by propagating said scribble on at least part of the reminder of the media.

FIG.1

EP 2 538 372 A1

**Description**

FIELD OF THE INVENTION

This invention relates generally to the technical field of gesture recognition.

BACKGROUND OF THE INVENTION

Human gestures are a natural means of interaction and communication among people. Gestures employ hand, limb and body motion to express ideas or exchange information non-verbally. There has been an increasing interest in trying to integrate human gestures into human-computer interface. Gesture recognition is also important in automated surveillance and human monitoring applications, where they can yield valuable clues into human activities and intentions.

Generally, gestures are captured and embedded in continuous video streams, and a gesture recognition system must have the capability to extract useful information and identify distinct motions automatically. Two issues are known to be highly challenging for gesture segmentation and recognition: spatio-temporal variation, and endpoint localization.

Spatio-temporal variation comes from the fact that not only do different people move in different ways, but also even repeated motions by the same subject may vary. Among all the factors contributing to this variation, motion speed is the most influential, which makes the gesture signal demonstrate multiple temporal scales.

The endpoint localization issue is to determine the start and end time of a gesture in a continuous stream. Just as there are no breaks for each word spoken in speech signals, in most naturally occurring scenarios, gestures are linked together continuously without any obvious pause between individual gestures. Therefore, it is infeasible to determine the endpoints of individual gestures by looking for distinct pauses between gestures. Exhaustively searching through all the possible points is also obviously prohibitively expensive. Many existing methods assume that input data have been segmented into motion units either at the time of capture or manually after capture. This is often referred to as isolated gesture recognition (IGR) and cannot be extended easily to real-world applications requiring the recognition of continuous gestures.

Several methods have been proposed for continuous gesture segmentation and recognition in the state of the art. Based on how segmentation and recognition are mutually intertwined, these approaches can be classified into two major categories: separate segmentation and recognition, and simultaneous segmentation and recognition. While the first category detects the gesture boundaries by looking into abrupt feature changes and segmentation usually precedes recognition, the latter treats segmentation and recognition as aspects of the same problem and are performed simultaneously. Most methods in both of the two groups are based on various forms of HMM *(Hidden Markov Model),* and DP *(Dynamic Programming)* based methods, i.e., DTW *(Dynamic Time Warping)* and CDP *(Continuous Dynamic Programming).*

Gesture recognition systems are designed to work within a certain context related to a number of predefined gestures. These prior predefinitions are necessary to deal with semantic gaps. Gesture recognition systems are usually based on a matching mecanism. They try to match the information extracted from the scene, such as a skeleton, with the closest stored model. So, to recognize a gesture we need to have a pre-saved model associated with it.

In the literature, two main approaches are used for gesture recognition: recognition by modeling the dynamic and recognition by modeling the states. Gesture Tek (*http://www.gesturetek.com/*) proposes the Maestro3D SDK which includes a library of one-handed and two-handed gestures and poses. This system does provide capability to easily model new gesture. A limited library of gesture is available at *http://www.eyesight-tech.com/technology/*. With the Kinect of Microsoft, the library of gesture is always limited and the user can not easily customize or define new gesture model. As it has been identified than more of 5 000 gestures exists depending of the (culture, country, etc...), providing a limited library is insufficient.

Document WO 2010/135617 discloses a method and apparatus for performing gesture recognition.

One object of the invention is to provide a process and a system for gesture recognition enabling the user to easily customize the gesture recognition, redefine the gesture model without any specific skill.

A further object of the inventin is to provide a process ans a system for gesture recognition enabling the use of a conventionnal 2D camera.

DESCRIPTION OF THE DRAWING

The objects, advantages and other features of the present invention will become more apparent from the following disclosure and claims. The following non-restrictive description of preferred embodiments is given for the purpose of exemplification only with reference to the accompanying drawing in which

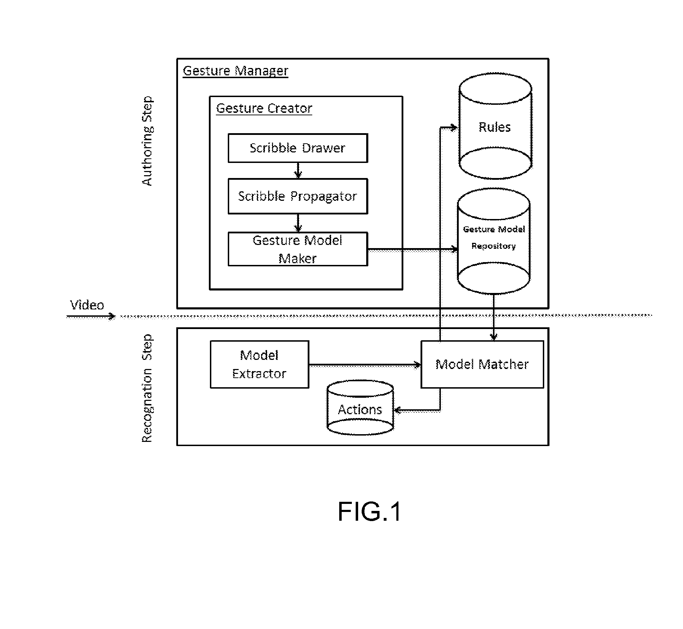

- figure 1 is a block diagram illustrating a functional embodiment;

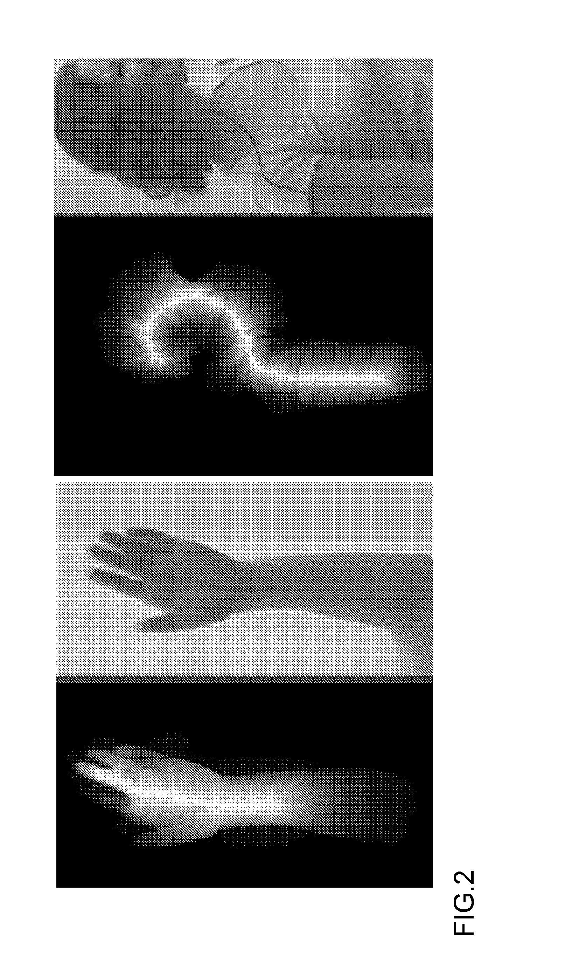

- figure 2 shows illustrative simulation results of a color distance transform based on a scribble

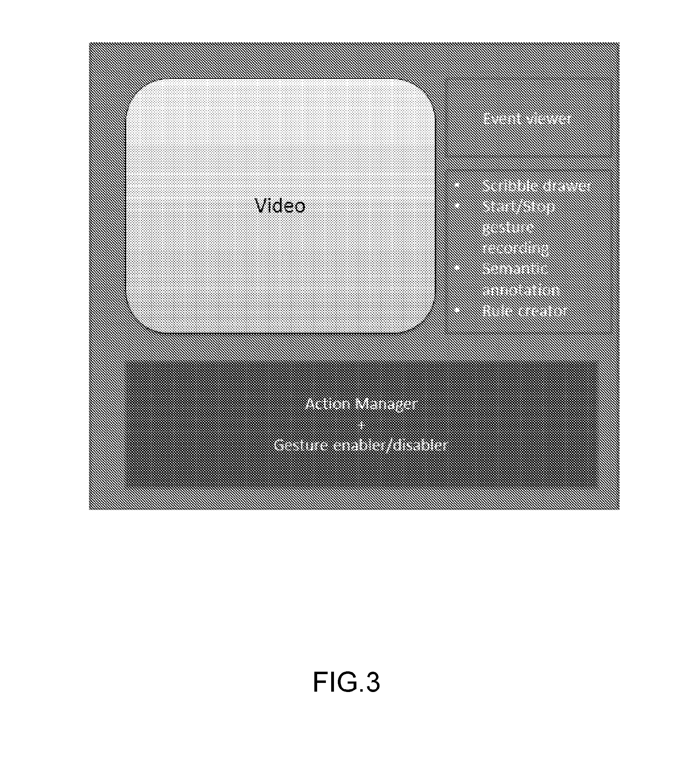

- figure 3 is an example of a scribble drawer GUI.

SUMMARY OF THE INVENTION

The present invention is directed to addressing the effects of one or more of the problems set forth above.

The following presents a simplified summary of the invention in order to provide a basic understanding of some aspects of the invention.

This summary is not an exhaustive overview of the invention. It is not intended to identify key of critical elements of the invention or to delineate the scope of the invention. Its sole purpose is to present some concepts in a simplified form as a prelude to the more detailed description that is discussed later.

While the invention is susceptible to various modification and alternative forms, specific embodiments thereof have been shown by way of example in the drawings. It should be understood, however, that the description herein of specific embodiments is not intended to limit the invention to the particular forms disclosed.

It may of course be appreciated that in the development of any such actual embodiments, implementation-specific decisions should be made to achieve the developer's specific goal, such as compliance with system-related and business-related constraints. It will be appreciated that such a development effort might be time consuming but may nevertheless be a routine understanding for those or ordinary skill in the art having the benefit of this disclosure.

The invention relates, according to a first aspect, on a method for performing gesture recognition within a media, comprising the steps of:

- receiving at least a first raw frame from at least one camera;

- drawing at least one scribble pointing out one element within said first raw frame;

- tracking said scribble across the media by propagating said scribble on at least part of the remainder of the media.

The word "media" here designates a video media e.g. a video made by a person using an electronic portable device comprising a camera, for instance a mobile phone. The word "Gesture" is used here to designate the movement of a part of a body, for instance arm movement or hand movement. The word "scribble" is used to designate a line made by the user, for instance a line on the arm. The use of scribble for matting a forgoing object in an image having a background is known (see US 2009/0278859 in the name of Yssum Reaserch Development). The use of propagating scribbles for colorization of images is known (see US 2006/0245645 in the name of Yatziv). The use of rough scribbles provided by the user of image segmentation system is illustrated in Tao et al Pattern Recognition pp. 3208-3218.

Advantageously, according to the present invention, propagating said scribble comprises estimating the future positions of said scribble on the next frame based on previous information extracted from the previous frame, information extracted from the previous frame comprising chromatic and spatial information.

Advantageously, a color distance transform is calculated in each point of the image as follows:

$$CDT\,(i,j) = \, min_{(k,l)\in M}\,\left(CDT\,(i\,+\,k,j\,+\,l) + weight(k\,,l) + DifColor\big(p_{(i,j)}, p_{(k,l)}\big)\right);$$

initialization

$$CDT\,(i,j) = \, 0 \;\; if \;\; (i,j) \notin Scribble \;\; and\, CDT\,(i,j) \, = \, +\infty \;\; if \;\; (i,j) \in Scribble$$

Advantageously, the color distance transform comprises two dimensions of the image and a third dimension coming from the time, a skeleton being extracted from the color distance transform.

The frame is advantagesously first convolved by a Gaussian mask, the maximums being afterwards extracted by the horizontal and vertical directions. Related scribble determined by tracking of the scrbble are aggregated, a semantic tag being attached to said aggregated related scribble to form a gesture model. A comparaison is made between a current scribble with a stored gesture model.

Advantagesouly, a query of a rule database is made triggering at least one action associated with a gesture tag.

The invention relates, according to a second aspect, on a system for performing gesture recognition within a media, comprising at least a scribble drawer for drawing at least one scribble pointing out one element within said first raw frame and a scribble propagator for tracking said scribble across the media by propagating said scribble on at least part of the reminder of the media to determine related scribbles.

Advantageously, the system comprises a gesture model maker for aggregating related scribble to form a gesture model and a gesture model repository storing said gesture model together with at least one semantic tag.

Advantageously, the system comprises a gesture creator including said scribble drawer, said scribble propagator and said gesture model maker.

Advantageously, the system comprises a gesture manager including said gesture creator and a rule database containing links between actions and gesture tags.

Advantagesouly, the system comprises recognition module including a model matcher for comparing a current frame scribble with stored models contained in the gesture model repository. The model matcher sends queries to the rule database for triggering action associated with a gesture tag.

The invention relates, according to a third aspect, on a computer program including instructions stored on a memory of a computer and/or a dedicated system, wherein said computer program is adapted to perform the method presented above or connected to the system presented above.

DETAILED DESCRIPTION OF ILLUSTRATIVE EMBODIMENTS

In the following description, "gesture recognition" designates:

- a definition of a gesture model, all gestures handled by the application being created and hard coded during this definition;

- a recognition of gestures.

To recognize a new gesture, a model is generated and associated to its semantic definition.

To enable an easy gesture modeling, the present invention provides a specific gesture authoring tool. This gesture authoring tool is based on a scribble propagation technology. It is a user friendly interaction tool, in wich the user can roughly point out some elements of the video by drawing some scribbles. Then, selected elements will be tracked accross the video by propagating the initial scribbles to get its movement information.

The present invention allows users to define in easy way, dynamicaly and on the fly new gestures to recognize.

The proposed architecture is divided in two parts. The first part is semiautomatic and need user's interaction. This is the gesture authoring component. The second one achieves the recognition process based on the stored gesture models and rules.

The authoring component is composed from two parts, a _Gesture Creator,_ and a _Gesture Model Repository_ to store the created models.

The Gesture Creator module is subdivided on three parts:

o the first is the _Scribble Drawer._ Scribble Drawer allows users throw a GUI (see figgure 3) to designate an element from the video. As example, the user wants to define a trigger to know when the arm of the presenter is bent or stretched. To do it, the user draws a scribble on the presenter's arm.

o then the _Scribble Propagator_ propagates this scribble on the reminder of the video to designate the arm.

The propagation of the scribbles is achieved by estimating the future positions of scribble on the next frame based on the previous information extracted from the image.

The first step consists on combining chromatic and spatial information. A color distance transform (denoted CDT) is calculated based on the current image and the scribble. In addition of getting special information like the distance transform, this new transform emphasize the distance map by increasing values of the "far" areas when their color similitude with the area designated by the scribble is high. Given an approximation of the Euclidian distance like Chamfer mask M. DifColor denotes the Euclidian distance between two colors. In each point of the image, the CDT is calculated as follow:

$$CDT\ (i,j) = min_{(k,l) \in M} \left( CDT\ (i + k, j + l) + weight(k, l) + DifColor\big(p_{(i,j)}, p_{(k,l)}\big)\right);$$

initialization

$$CDT\ (i,j) = 0 \ \ if \ \ (i,j) \notin Scribble \ \ and \ CDT\ (i,j) = +\infty \ if \ \ (i,j) \in Scribble$$

The mask is decomposed into two parts and a double scan of the image is achieved to update the all min distances.

To get an estimation of the next scribble position, the CDT is extended to 3D (two dimensions of the image and the third dimension come from the time axe) or a Volume based color distance transform, denoted C3DT.

This transform is done successively on image pairs. The obtained result can be organized in layers. The layer t+1 represent a region in which the scribble can be propagated. So, the scribble drawn in the image t can be propagated with the obtained mask from the layer t+1 of the C3DT. To limit the drift and stay away from probable propagations errors, the obtained mask maybe reduced as a simple scribble.

A skeleton is extracted from the C3DT layer by two operations. Firstly, the image is convolved by a Gaussian mask to deal with the internal holes and image's imperfections. Then the maximums are extracted in the horizontal and vertical directions. Some imperfections may appears after this step, so, the suppression of little component is necessary to get a clean scribble. This scribble is used as marker for the next pair of images. The previous process is repeated and so on.

The user clicks, then to indicate the end of the action and put the semantic tag. All related scribbles are then aggregated within a gesture model by the _Gesture Model Maker_ and then stored into _Gesture Model Repository_. The Gesture Model Maker module combines the gesture with its semantic tags on a gesture model. Each scribble is transformed to a vector describing the spatial distribution of the one state of the gesture. After interring all the scribbles, the model will contains all the possible state of the gesture and their temporal sequencing. Also inflection's points and their displacement vectors are stored.

In the recognition module, the _Model Matcher_ compares the current video scribbles with the stored models. If this scribble matches with the beginning of more than one model. The comparison continues with the next elements of the selected model set to get the closest one. If all the scribble sequence is matched, the gesture is recognized. A query on the _Rules database_ allows triggering the action associated with this gesture's tag. A rule can be considered as an algebraic combination of basic instructions; e.g.:

- Hand rose = show slides & start recording

- Gesture1 | gesture2 = actionX.

As example, the user can be a person filming a scientific or commercial presentation (such as a lecture, trade show). He wants to detect specific gestures and associate them to actions in order to automate the video director. For instance, automatic camera zoom when the presenter point out a direction and area of the scene. So, when the presenter point-out something, the user make a roughly sribble disgnating the hand and the arm of the presenter. The scribbles are propagated automatically. Finally, he indicates the end of the gesture to recognize and associates a semantic tag to this gesture.

The invention allows users to define dynamicaly the gestures they want to recognize. No technical skill need.

The main advantages of this invention are automatic foreground segmentation and skeleton extraction, dynamic gesture definition, gestures authoring, capability to link gestures to actions/interactions and user-friendly gesture modeling and recognition

**Claims**

1. A method for performing gesture recognition within a media, comprising the steps of:

   - receiving at least a first raw frame from at least one camera;
   - drawing at least one scribble pointing out one element within said first raw frame;
   - tracking said scribble across the media by propagating said scribble on at least part of the remainder of the media.

2. A method according to claim 1, wherein propagating said scribble comprises estimating the future positions of said scribble on the next frame based on previous information extracted from the previous frame.

3. A method according to claim 2, wherein information extracted from the previous frame comprises chromatic and spatial information.

4. A method according to claim 3, wherein a color distance transform is calculated at each point of the image.

5. A method according to claim 4, wherein the color distance transform is computed with reference to two dimensions of the image and a third dimension derived from the time.

6. A method according to claim 4, wherein a skeleton is extracted from the color distance transform.

7. A method according to claim 6, wherein prior to extracting the skeleton, the frame is first convolved in the horizontal and vertical directions with a two dimensional Gaussian mask, and the skeleton is therafter extracted by extracting maxima of the convolved image in the two said directions.

8. A method according to any of claims 1 to 7, wherein related scribbles determined by tracking of the said scribble are aggregated, a semantic tag being attached to said aggregated related scribble to form a gesture model.

9. A method according to claim 8, further comprising comparing a current scribble with a stored gesture model.

10. A method according to claim 9, further comprising querying a rule database, and thereby triggering at least one action associated with a gesture tag.

11. A system for performing gesture recognition within a media, comprising at least a scribble drawer for drawing at least one scribble pointing out one element within a first raw frame and a scribble propagator for tracking said scribble across the media by propagating said scribble on at least part of the reminder of the media to determine related scribbles.

12. A system according to claim 11, comprising a gesture model maker for aggregating related scribbles to form a gesture model.

13. A system according to claim 12, comprising a gesture model repository storing said gesture model together with at least one semantic tag.

14. A system according to claim 13, comprising a gesture creator including said scribble drawer, said scribble propagator and said gesture model maker.

15. A system accroding to claim 14, comprising a gesture manager including said gesture creator and a rule database containing links between actions and gesture tags.

16. A system according to claim 15, comprising a recognition module includng a model matcher for comparing a current frame scribble with stored models contained in the gesture model repository.

17. A system according to claim 16, wherein the model matcher sends queries to the rule database for triggering actions associated with a gesture tag.

18. A computer program including instructions stored on a memory of a computer and/or a memory of a dedicated system, wherein said computer program is adapted to perform the method as claimed in any of the preceding claims 1 to 10.

FIG.1

FIG.2

FIG.3

Europäisches
Patentamt

European
Patent Office

Office européen
des brevets

## EUROPEAN SEARCH REPORT

Application Number

EP 11 17 1237

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | BOGDAN IONESCU ET AL: "Dynamic Hand Gesture Recognition Using the Skeleton of the Hand", EURASIP JOURNAL ON ADVANCES IN SIGNAL PROCESSING, vol. 2005, no. 13, 1 January 2005 (2005-01-01), pages 2101-2109, XP55013236, ISSN: 1687-6172, DOI: 10.1155/ASP.2005.2101 * the whole document * | 1-18 | INV. G06K9/00 G06K9/34 G06K9/44 G06T7/00 |
| Y | XUE BAI ET AL: "Geodesic Matting: A Framework for Fast Interactive Image and Video Segmentation and Matting", INTERNATIONAL JOURNAL OF COMPUTER VISION, vol. 82, no. 2, 1 April 2009 (2009-04-01), pages 113-132, XP55013242, ISSN: 0920-5691, DOI: 10.1007/s11263-008-0191-z * the whole document * | 1-18 | |
| A,D | TAO W ET AL: "Interactively multiphase image segmentation based on variational formulation and graph cuts", PATTERN RECOGNITION, ELSEVIER, GB, vol. 43, no. 10, 1 October 2010 (2010-10-01), pages 3208-3218, XP027095413, ISSN: 0031-3203 [retrieved on 2010-04-24] * abstract * | 1 | TECHNICAL FIELDS SEARCHED (IPC) G06K G06T |

-/--

The present search report has been drawn up for all claims

| Place of search | Date of completion of the search | Examiner |
|---|---|---|
| The Hague | 5 January 2012 | Neubüser, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 11 17 1237

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LIMAN LIU ET AL: "A variational model and graph cuts optimization for interactive foreground extraction", SIGNAL PROCESSING, vol. 91, no. 5, 1 May 2011 (2011-05-01), pages 1210-1215, XP55013238, ISSN: 0165-1684, DOI: 10.1016/j.sigpro.2010.11.009 * abstract * | 1 | |
| A,D | US 2007/165966 A1 (WEISS YAIR [IL] ET AL) 19 July 2007 (2007-07-19) * the whole document * | 1 | |
| A,D | US 2010/295783 A1 (EL DOKOR TAREK A [US] ET AL) 25 November 2010 (2010-11-25) * abstract * | 1 | |
| | | | TECHNICAL FIELDS SEARCHED (IPC) |

The present search report has been drawn up for all claims

| Place of search | Date of completion of the search | Examiner |
|---|---|---|
| The Hague | 5 January 2012 | Neubüser, Bernhard |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 11 17 1237

This annex lists the patent family members relating to the patent documents cited in the above-mentioned European search report.
The members are as contained in the European Patent Office EDP file on
The European Patent Office is in no way liable for these particulars which are merely given for the purpose of information.

05-01-2012

| Patent document cited in search report | Publication date | Patent family member(s) | Publication date |
|---|---|---|---|
| US 2007165966 A1 | 19-07-2007 | US 2007165966 A1<br>US 2009278859 A1 | 19-07-2007<br>12-11-2009 |
| US 2010295783 A1 | 25-11-2010 | US 2010295783 A1<br>WO 2010135617 A1 | 25-11-2010<br>25-11-2010 |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010135617 A
- US 20090278859 A
- US 20060245645 A

**Non-patent literature cited in the description**

- **TAO et al.** *Pattern Recognition,* 3208-3218